# EUROPEAN PATENT SPECIFICATION

(11) **EP 4 609 983 B1**
(45) Date of publication and mention of the grant of the patent: **01.04.2026**
(21) Application number: 24160207.7
(22) Date of filing: 28.02.2024
(51) Int. Cl.: B23K 26/242, B23K 26/26, B23K 26/32, B23K 101/18, B23K 103/04

(54) **LASER WELDING METHOD OF STEEL PLATES**
LASERSCHWEISSVERFAHREN VON STAHLPLATTEN
PROCÉDÉ DE SOUDAGE AU LASER DE PLAQUES D'ACIER

(43) Date of publication of application: 03.09.2025
(73) Proprietor: Taiwan Mask Corporation, Hsinchu County 300 (TW)
(72) Inventor: LAI, Li-Wen, Baoshan Township Hsinchu County 300 (TW); TSAI, Wei-Lun, Baoshan Township Hsinchu County 300 (TW); CHEN, Ching-Cheng, Baoshan Township Hsinchu County 300 (TW); TAI, Chih-Hui, Baoshan Township Hsinchu County 300 (TW); HO, Hsin-I, Baoshan Township Hsinchu County 300 (TW)
(74) Representative: Viering, Jentschura & Partner mbB Patent- und Rechtsanwälte

(56) References cited:
- CN-A- 113 182 675
- CN-A- 113 182 687
- CN-A- 115 106 655
- JP-A- 2016 120 506

## Description

The present invention relates to a laser welding method of steel plates, see claim 1.

### BACKGROUND OF THE INVENTION

Using a laser to weld thick steel plates is a common technology nowadays. For example, Chinese Patent Publication No. CN 115106655 A discloses a laser welding method for medium and thick steel plates. By moving the laser beam back and forth at a high speed in the direction parallel to the thickness of the steel plates during laser welding, the heat of the laser beam in the direction of the thickness of the steel plates is guaranteed to be uniform. This reduces hole fluctuations caused by unstable air pressure due to uneven vapor plumes in the depth direction inside the laser hole during deep welding, thereby improving hole stability, reducing defects, such as pores, humps, and nail head weld bead, improving weld quality, enhancing the absorption of the laser beam by the metal in the small hole, increasing the molten depth.

However, in the aforementioned patent, the thickness of the steel plates is allowed to be about 10 millimeters. The laser welding method is not applicable to thicker steel plates.

CN 113182687 A (describing the preamble of claim 1) shows a method of using two separate laser beams for filler wire welding. CN 113182675 A discloses a method of using two separate laser beams to address liquid column formation and spattering during high-power non-penetration welding with high-power lasers. JP 2016120506 A discloses a method of conducting welding in a low-vacuum environment to enhance the stability of the welding process and ensure high-quality welds. CN 115106655 A discloses a method of using high-frequency oscillation of the laser beam to stabilize melting holes and enhance penetration.

### SUMMARY OF THE INVENTION

The present invention is defined in independent claim 1. Preferred embodiments of the present invention are further defined in the dependent claims.

According to one aspect of the present invention, a laser welding method of steel plates is provided. The method comprises the following steps of: joining two steel plates, wherein a joint face of the steel plates extends along a joint line; using a laser to weld the joint face, wherein the laser has a power of between 20,000 and 30,000 watts, a welding angle is defined between the laser and the joint line, and the welding angle is between 0 degrees and 10 degrees; forming a molten region on the joint face using the laser, wherein the molten region extends along the joint line, the molten region has a molten depth of between 20 and 50 mm, and the molten region has a molten width of between 4 and 7 mm, after the molten region is cooled and solidified, the steel plates are combined with each other.

According to an example useful for understanding but not forming part of the present invention, a steel plate assembly welded by laser welding is provided. The steel plate assembly comprises two steel plates and a molten region. The steel plates are joined. A joint face of the steel plates extends along a joint line. The molten region extends along the joint line. The molten region has a molten depth of between 20 and 50 mm. The molten region has a molten width of between 4 and 7 mm. The molten region is formed by welding the joint face using a laser. The laser has a power of between 20,000 and 30,000 watts. A welding angle is defined between the laser and the joint line. The welding angle is between 0 degrees and 10 degrees. After the molten region is cooled and solidified, the steel plates are combined with each other.

Preferably, at least one of the following conditions is met: a defocusing distance of the laser is between 0 and ± T/2 mm, T is a thickness of the steel plates; a spot shape of the laser is circular or donut-shaped; a spot diameter of the laser is between 0.3 and 5 mm.

Preferably, when the steel plates are joined, the steel plates have a clearance range of not more than 5% of a width of the steel plates.

Preferably, the laser has a welding speed ranging from 5 to 80 millimeters per second.

Preferably, a protective gas is provided to remove a plasma generated during welding of the laser. The protective gas is one of argon, helium, nitrogen and carbon dioxide, or a combination thereof.

According to the above technical features, the present invention can achieve the following effects:

The molten depth is 20 to 50 millimeters, so the laser welding method is applicable to thicker steel plates.

The molten width W is between 4 and 7 mm, which can enhance the laser welding strength between the steel plates.

### BRIEF DESCRIPTION OF THE DRAWINGS

FIG. 1 is an exploded view of an embodiment not covered by the present invention;
FIG. 2 is a flow block diagram of the embodiment of the present invention;
FIG. 3 is a first schematic view of the embodiment of the present invention, showing the welding angle;
FIG. 4 is a second schematic view of the embodiment of the present invention, showing the defocusing distance;
FIG. 5 is a first photograph of the embodiment of the present invention;
FIG. 6 is a second photograph of the embodiment of the present invention;
FIG. 7 is a third photograph of the embodiment of the present invention; and
FIG. 8 is a fourth photograph of the embodiment of the present invention.

### DETAILED DESCRIPTION OF THE PREFERRED EMBODIMENTS

Embodiments of the present invention will now be described, by way of example only, with reference to the accompanying drawings.

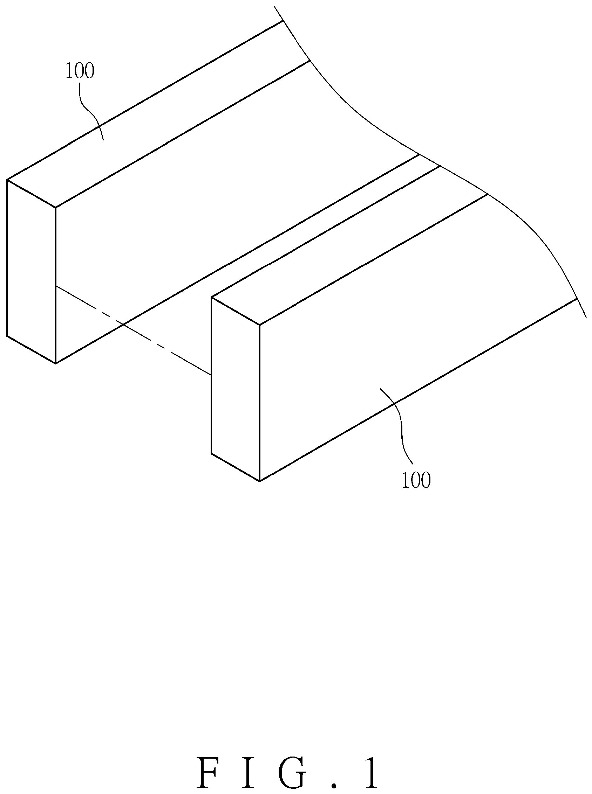

As shown in FIG. 1 through FIG. 3, a steel plate assembly welded by laser welding and a laser welding method for steel plates are described.

The laser welding method for steel plates comprises the following steps:

Two steel plates 100 are joined. A joint face 1 of the steel plates 100 extends along a joint line L. The steel plates 100 have a clearance range of not more than 5% of the width of the steel plates 100.

The joint face 1 is welded using a laser 200. The power of the laser 200 is between 20,000 and 30,000 watts. A welding angle *θ* is defined between the laser 200 and the joint line L. The welding angle *θ* is between 0 degrees and 10 degrees.

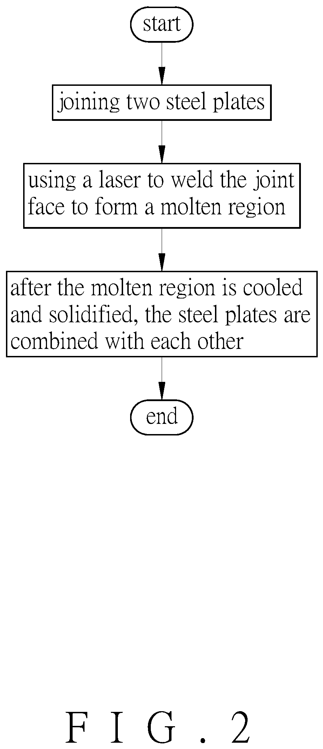

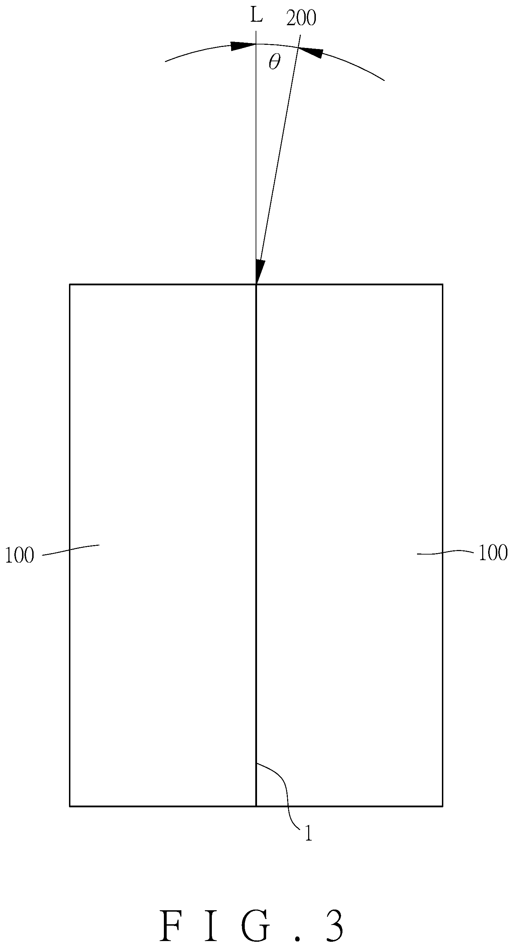

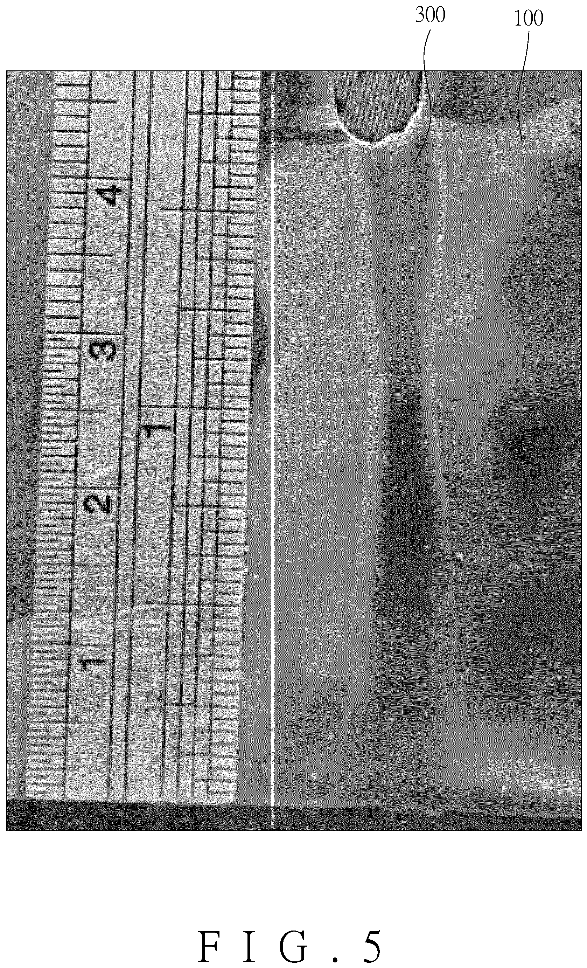

Please refer to FIG. 3 through FIG. 5, in cooperation with FIG. 2. When the joint face 1 is welded by the laser 200, a defocusing distance of the laser 200 is between 0 and ± 25 mm. That is, the positive defocusing distance D1 is up to 25 mm, and the negative defocusing distance D2 is up to -25 mm, which is equivalent to half of the thickness T (between 20 and 50 mm) of the steel plates 100. If the surface of the steel plates 100 serves as the focal point 2, the positive defocusing point 3 will be 25 mm above the focal point 2, and the negative defocusing point 4 will be 25 mm below the focal point 2.

The laser 200 has a power variation of ± 3%. The wavelength of the laser 200 is between 1030 and 1080 nanometers. The laser 200 has a welding speed ranging from 5 to 80 millimeters per second. Preferably, the spot shape of the laser 200 is circular or donut-shaped, and the spot diameter of the laser 200 is between 0.3 and 5 mm.

The above-mentioned values may be changed according to the thickness T of the steel plates. For example, when the thickness T of the steel plates is between 40 and 50 mm, the power of the laser 200 may be 30,000 watts, the welding speed is between 5 and 80 millimeters per second, and the spot diameter of the laser 200 is between 0.3 and 5 millimeters.

A protective gas is used to remove a plasma generated during the welding of the laser 200. The protective gas is one of argon, helium, nitrogen and carbon dioxide, or a combination thereof.

By changing the defocusing distance and the power variation, the laser 200 enables the joint face 1 to form a molten region 300 extending along the joint line L.

The molten depth of the molten region 300 is between 20 and 50 mm, which is equivalent to the thickness T of the steel plates 100. The molten width W of the molten region 300 is between 4 and 7 mm. After the molten region 300 is cooled and solidified, the steel plates 100 are combined with each other to form a steel plate assembly.

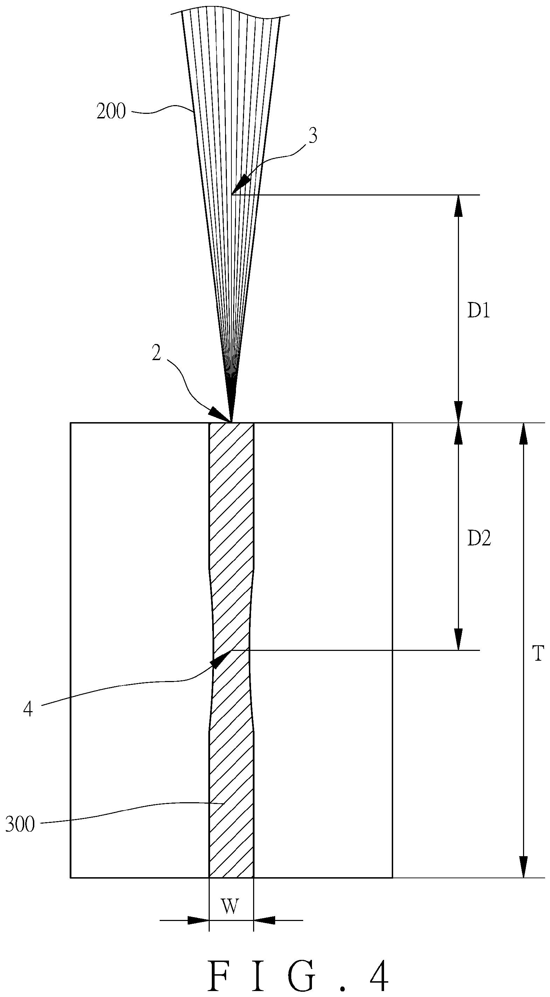

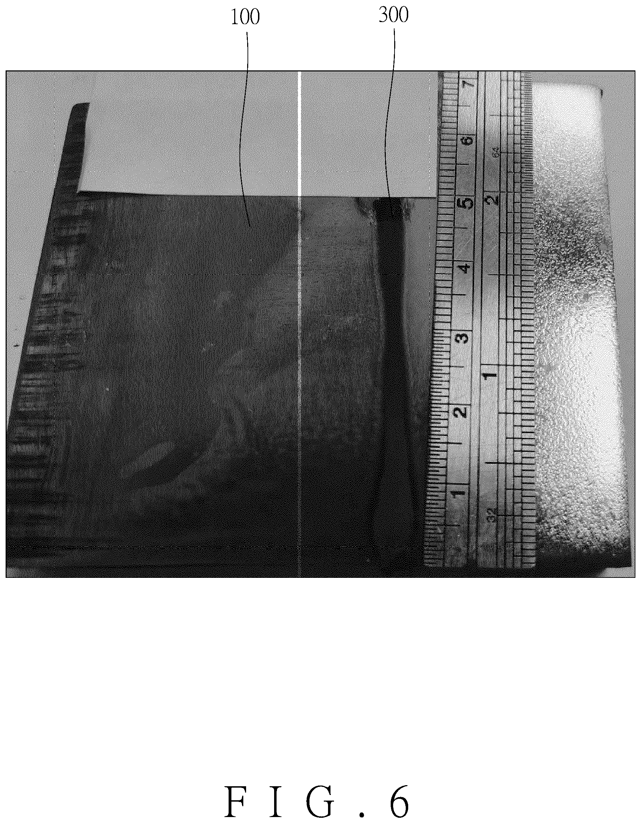

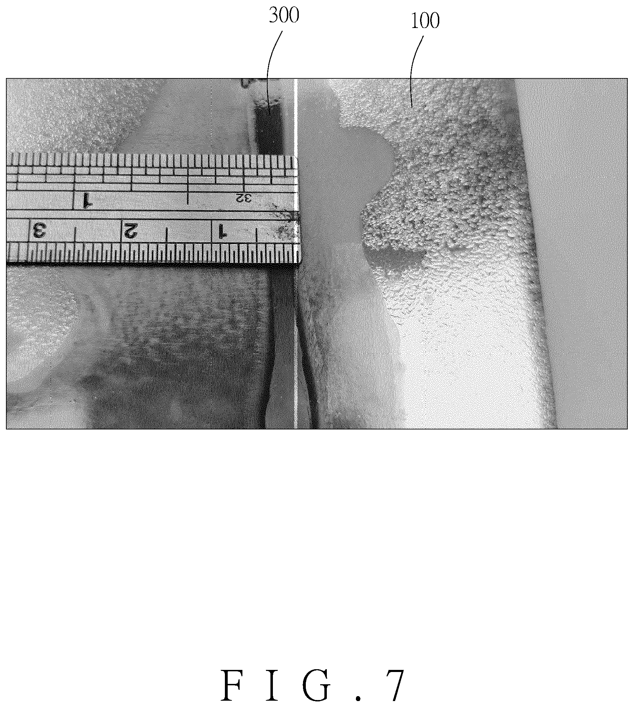

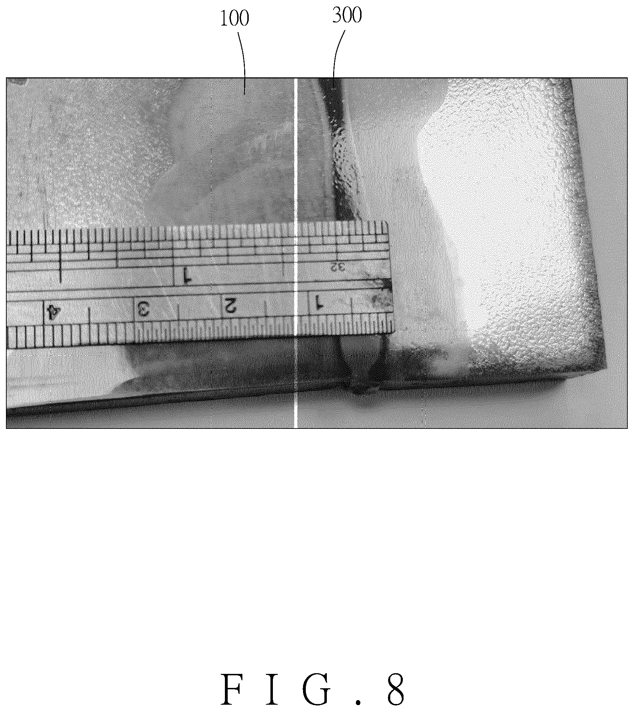

Please refer to FIG. 6 through FIG. 8, in cooperation with FIG. 4. As can be seen from the photographs of the actual steel plate assembly manufactured by the laser welding method, the molten depth is indeed up to 50 mm, and the molten width W is indeed between 4 and 7 mm.

The molten depth is 20 to 50 millimeters, so the laser welding method is applicable to thicker steel plates 100. The molten width W is between 4 and 7 mm, which can enhance the laser welding strength between the steel plates 100.

Although particular embodiments of the present invention have been described in detail for purposes of illustration, various modifications and enhancements may be made without departing from the scope of the present invention as defined by the appended claims.

## Claims

1. A laser welding method for steel plates, comprising the following steps of:
joining two steel plates (100), wherein a joint face (1) of the steel plates (100) extends along a joint line (L);
the laser welding method being **characterising by**:
using a laser (200) to weld the joint face (1), wherein the laser (200) has a power of between 20,000 and 30,000 watts, the laser (200) has a power variation of ± 3%, a wavelength of the laser (200) is between 1030 and 1080 nanometers, a welding angle (*θ*) is defined between the laser (200) and the joint line (L), and the welding angle (*θ*) is between 0 degrees and 10 degrees;
forming a molten region (300) on the joint face (1) using the laser (200), wherein the molten region (300) extends along the joint line (L), the molten region (300) has a molten depth of between 20 and 50 mm, which is equivalent to the thickness (T) of the steel plates (100), and the molten region (300) has a molten width (W) of between 4 and 7 mm, after the molten region (300) is cooled and solidified, the steel plates (100) are combined with each other.

2. The laser welding method as claimed in claim 1, wherein at least one of the following conditions is met: a defocusing distance of the laser (200) is between 0 and ± T/2 mm, T is a thickness of the steel plates (100); a spot shape of the laser (200) is circular or donut-shaped; a spot diameter of the laser (200) is between 0.3 and 5 mm.

3. The laser welding method as claimed in claim 1, wherein when the steel plates (100) are joined, the steel plates (100) have a clearance range of not more than 5% of a width of the steel plates (100).

4. The laser welding method as claimed in claim 1, wherein the laser (200) has a welding speed ranging from 5 to 80 millimeters per second.

5. The laser welding method as claimed in claim 1, further providing a protective gas to remove a plasma generated during welding of the laser (200), wherein the protective gas is one of argon, helium, nitrogen and carbon dioxide, or a combination thereof.

## Patentansprüche

1. Laserschweißverfahren für Stahlplatten, das die folgenden Schritte umfasst:
Aneinanderfügen von zwei Stahlplatten (100), wobei die Fügefläche (1) der Stahlplatten (100) sich entlang einer Fügelinie (L) erstreckt; **dadurch gekennzeichnet, dass**
ein Laser (200) zum Schweißen der Fügefläche (1) verwendet wird, wobei der Laser (200) eine Leistung zwischen 20.000 und 30.000 Watt aufweist, wobei der Laser (200) eine Leistungsschwankung von ±3 % aufweist, wobei die Wellenlänge des Lasers (200) zwischen 1030 und 1080 Nanometern liegt, und wobei der Schweißwinkel (θ) zwischen dem Laser (200) und der Fügelinie (L) definiert ist und der Schweißwinkel (θ) zwischen 0 Grad und 10 Grad liegt; und
Formen eines Schmelzbereichs (300) auf der Fügefläche (1) unter Verwendung des Lasers (200), wobei der Schmelzbereich (300) sich entlang der Fügelinie (L) erstreckt, wobei der Schmelzbereich (300) eine Schmelztiefe zwischen 20 und 50 mm aufweist, die der Dicke (T) der Stahlplatten (100) entspricht, wobei der Schmelzbereich (300) eine Schmelzbreite (W) zwischen 4 und 7 mm aufweist, und wobei nach dem Abkühlen und Erstarren des Schmelzbereichs (300) die Stahlplatten (100) miteinander verbunden sind.

2. Laserschweißverfahren nach Anspruch 1, **dadurch gekennzeichnet, dass** mindestens eine der folgenden Bedingungen erfüllt ist: der Defokussierungsabstand des Lasers (200) liegt zwischen 0 und ±T/2 mm, wobei T die Dicke der Stahlplatten (100) ist; die Fokusform des Lasers (200) ist kreisförmig oder ringförmig; und der Fokusdurchmesser des Lasers (200) liegt zwischen 0,3 und 5 mm.

3. Laserschweißverfahren nach Anspruch 1, **dadurch gekennzeichnet, dass** beim Aneinanderfügen der Stahlplatten (100) die Stahlplatten (100) einen Spaltbereich von nicht mehr als 5 % der Breite der Stahlplatten (100) aufweisen.

4. Laserschweißverfahren nach Anspruch 1, **dadurch gekennzeichnet, dass** der Laser (200) eine Schweißgeschwindigkeit im Bereich von 5 bis 80 Millimetern pro Sekunde aufweist.

5. Laserschweißverfahren nach Anspruch 1, **gekennzeichnet durch** das Bereitstellen eines Schutzgases, um ein während des Schweißens mit dem Laser (200) erzeugtes Plasma zu entfernen, wobei das Schutzgas eines aus Argon, Helium, Stickstoff und Kohlendioxid oder eine Kombination davon ist.

## Revendications

1. Procédé de soudage au laser pour plaques en acier, **caractérisé par le fait qu'**il comprend les étapes suivantes :
la connexion de deux plaques en acier (100), une face de jonction (1) des plaques en acier (100) s'étendant le long d'une ligne de jonction (L) ;
le procédé de soudage au laser étant **caractérisé par** :
l'utilisation d'un laser (200) pour souder la face de jonction (1), le laser (200) a une puissance comprise entre 20.000 et 30.000 watts, le laser (200) a une variation de puissance de ± 3 %, la longueur d'onde du laser (200) est comprise entre 1030 et 1080 nanomètres, un angle de soudage (θ) est défini entre le laser (200) et la ligne de jonction (L), et l'angle de soudage (θ) est compris entre 0 degré et 10 degrés ;
la formation d'une zone en état de fusion (300) sur la face de jonction (1) à l'aide du laser (200), la zone en état de fusion (300) s'étend le long de la ligne de jonction (L), la zone en état de fusion (300) a une profondeur de fusion comprise entre 20 et 50 mm, ce qui équivaut à l'épaisseur (T) des plaques en acier (100), et la zone en état de fusion (300) présente une largeur en état de fusion (W) comprise entre 4 et 7 mm ; les plaques en acier (100) sont assemblées les unes avec les autres après le refroidissement et la solidification de la zone en état de fusion (300).

2. Procédé de soudage au laser selon la revendication 1, **caractérisé par le fait que** au moins l'une des conditions suivantes soit remplie : la distance de défocalisation du laser (200) est comprise entre 0 et ± T/2 mm, T étant l'épaisseur des plaques en acier (100) ; la forme de spot du laser (200) est circulaire ou en forme de beignet ; le diamètre du spot du laser (200) est compris entre 0,3 et 5 mm.

3. Procédé de soudage au laser selon la revendication 1, **caractérisé par le fait que** lorsque les plaques en acier (100) sont assemblées, les plaques en acier (100) ont une plage de jeu ne dépassant pas 5 % de la largeur des plaques en acier (100).

4. Procédé de soudage au laser selon la revendication 1, **caractérisé par le fait que** le laser (200) a une vitesse de soudage comprise entre 5 et 80 millimètres par seconde.

5. Procédé de soudage au laser selon la revendication 1, fournissant en outre un gaz protecteur pour éliminer le plasma généré pendant le soudage au laser (200), le gaz protecteur étant l'argon, l'hélium, l'azote et le dioxyde de carbone, ou une combinaison de ceux-ci.
